# EUROPEAN PATENT APPLICATION

(11) **EP 2 541 523 A1**
(43) Date of publication of application: **02.01.2013**
(21) Application number: 11461523.0
(22) Date of filing: 28.06.2011
(51) Int. Cl.: G08G 1/052, H04M 1/60

(54) **System and method for traffic telemetry**

(71) Applicant: "KSI.PL" Sp. z o.o., 31-864 Kraków (PL)
(72) Inventor: Mirecki, Jacek, 31-864 Kraków (PL); Mazurek, Przemyslaw, 31-864 Krakow (PL)
(74) Representative: Pawlowski, Adam

(57) **Abstract**

A method of collecting and calculating traffic telemetry data, comprising the steps of providing a movable object (102A, 102B) handling a wireless communication interface; providing at least two monitoring stations (103, 104) handling the wireless communication interface and having a geographical position known to a head-end station (108); upon detecting that the movable object (102A, 102B) is within the communication range of the monitoring station (103, 104), initiating a communication session between the movable object (102A, 102B) and the monitoring station (103, 104) and determining an identifier of the object and an identifier of the monitoring station; providing the identifier of the object, the identifier of the monitoring station and the time at which the communication session was initiated to a head-end station (108); processing, at the head-end station (108), received data related to at least two sessions initiated between the movable object and at least two different monitoring stations to determine an average speed of the object between the monitoring stations.

## Description

The invention relates to traffic telemetry i.e. to automotive and pedestrian telemetry systems and protocols including their use in intelligent traffic systems. The present disclosure identifies a method of conveying vehicle or pedestrian presence and movement data from a vehicle or a pedestrian to a remote monitoring facility i.e. a head-end, the method includes establishing a communication link between the vehicle or a device carried by the pedestrian and the remote monitoring facility; collecting object's (vehicle, pedestrian or the like) operation data from data sources; packaging the object operation data in a data packet using a transmission protocol and conveying the data packet over a communication link.

Intelligent Vehicle Highway Systems (IVHS) are computer-assisted methods to manage highway infrastructures, synchronize traffic lights, measure traffic flow, to alert drivers to ongoing traffic conditions through electronic billboards. There are also known other prior art innovations aimed at improving the quality and efficiency of road transportation systems for vehicles.

Another common prior art are systems of Electronic Toll Collection (ETC). Such systems aim at eliminating delays on toll roads by collecting tolls electronically. It is thus a technological implementation of a road pricing concept. It determines whether the cars passing are enrolled in the program, alerts enforcers for those that are not, and electronically debits the accounts of registered car owners without requiring them to stop.

The systems presented above are very complex and expensive because they need dedicated transmitters conveyed in the vehicles or sophisticated scanning and processing equipment that will allow for scanning vehicle plates or registration numbers stickers frequently glued to wind screens of vehicles passing by within the scanned area. Such sophisticated scanners must operate at great speed and must scan vehicles driving very close to each other. In case of many road lanes, typically a greater number of expensive scanners is required. Moreover, a fully automatic recognition, of traffic participant, has a significant error rate. Systems including a manual review stage have much lower error rates, but require a continuing staffing expense including time and wages.

Some automated vehicle identification systems used special barcodes affixed to each vehicle, to be read optically with a scanner at the toll booth. Unfortunately optical systems proved to have poor reading reliability, especially when faced with unfavourable weather and dirty vehicles.

A drawback of such systems is their cost and inability to process information data about pedestrians.

The aim of the present invention is to alleviate the aforementioned drawbacks of the prior art systems and present a method and a system, which will be cost-effective and will be easily applicable to pedestrians traffic telemetry.

The object of the present invention is method of collecting and calculating traffic telemetry data, comprising the steps of providing a movable object handling a wireless communication interface; providing at least two monitoring stations handling the wireless communication interface and having a geographical position known to a head-end station ; upon detecting that the movable object is within the communication range of the monitoring station, initiating a communication session between the movable object and the monitoring station and determining an identifier of the object and an identifier of the monitoring station; providing the identifier of the object, the identifier of the monitoring station and the time at which the communication session was initiated to a head-end station ; processing, at the head-end station, received data related to at least two sessions initiated between the movable object and at least two different monitoring stations to determine an average speed of the object between the monitoring stations.

Preferably, the communication session is initiated by the monitoring station and the identifier of the object, the identifier of the monitoring station and the time at which the communication session was initiated is provided to the head-end station by the monitoring station.

Preferably, the wireless communication interface is an interface compliant with the Bluetooth standard.

Preferably, the communication session is initiated by the movable object and the identifier of the object, the identifier of the monitoring station and the time at which the communication session was initiated is provided to the head-end station by the movable object.

Preferably, the wireless communication interface is an interface compliant with an IEEE 802.11-type standard.

Preferably, he identifier of the movable object is provided to the head-end station in an encrypted form.

Preferably, the method comprises the step of periodically varying the encryption parameters of the identifier of the movable object provided to the head-end station.

Another object of the present invention is a system for collecting and calculating traffic telemetry data, comprising a movable object handling a wireless communication interface; at least two monitoring stations handling the wireless communication interface and having a geographical position known to a head-end station ; means to detect that the movable object is within the communication range of the monitoring station and to initiate a communication session between the movable object and the monitoring station and determining an identifier of the object and an identifier of the monitoring station; means to provide the identifier of the object, the identifier of the monitoring station and the time at which the communication session was initiated to a head-end station ; wherein the head-end station is configured to receive data related to at least two sessions initiated between the movable object and at least two different monitoring stations to determine an average speed of the object between the monitoring stations.

These and other objects of the invention presented herein are accomplished by providing an improved system and method for traffic telemetry. Further details and features of the invention, its nature and various advantages will become more apparent from the following detailed description of the preferred embodiments shown in a drawing, in which:
FIG. 1 presents a monitored section of a road;
FIG. 2 shows a method for traffic data processing wherein the system is based on a wireless communication protocol such as Bluetooth;
FIG. 3 shows a method for traffic data processing wherein the system is based on a wireless communication protocol such as Wi-Fi.

The proposed traffic telemetry monitoring system can be movable and cover any suitable are where traffic is to be monitored. The flexibility of deployment is one of most important factors of the present invention.

The areas of heavy traffic are of particular interest, and will receive more data as more vehicles, pedestrians or other monitored entities/objects will be present within transceivers range. Because of its compact size and weight, the solution disclosed herein is most suitable to be a movable or even a portable system having a short range transmitters/receivers scanning within the nearest dozens of meters. Hence, with respect to these requirements and wherever it would be appropriate, a system is provided, which uses a short-range communication interface, such as one compliant with Bluetooth or Wi-Fi (IEEE 802.11) standards.

Bluetooth is a short-range Radio Frequency (RF) technology in the 2.4 GHz range, capable of point-to-multipoint connections at speeds up to 1 Mbps within a range of about 10 meters. Bluetooth signals do not require line-of-sight, can travel through most physical barriers.

Wi-Fi is a wireless standard for connecting electronic devices within range of about 20 meters indoors and about 100 meters outdoors. Various types of Wi-Fi networks can be implemented according to IEEE 802.11 standards, with different frequencies and operational ranges.

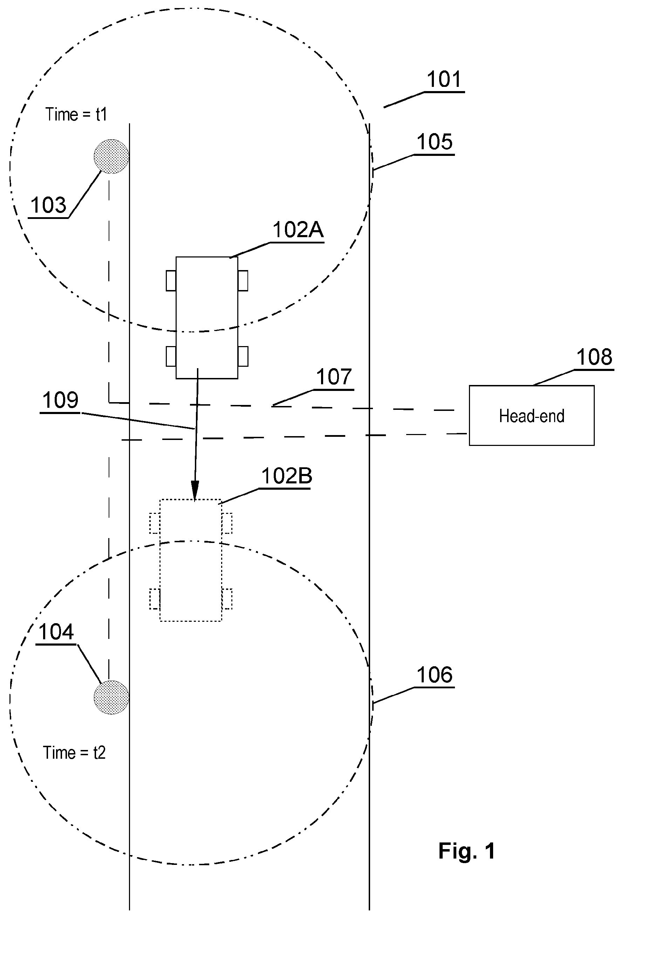

Referring to FIG. 1, 103 and 104 are monitoring stations used for monitoring movable objects 102A, 102B, such as vehicles, pedestrians or the like, passing on selected section of a road 101 and equipped with the object handling a particular wireless communication interface operated by the monitoring station, such as Bluetooth or Wi-Fi. While the object travels in the direction shown by the arrow 109 along the roadway 101, it enters within communication ranges 105, 106 of the monitoring stations 103, 104. A vehicle shown in position 102A is shown when terminating contact with the monitoring station 103 and the same vehicle is shown in position 102B when initiating contact with the monitoring station 104. Both monitoring stations 103 and 104 have their respective signal ranges 105 and 106 in which they can detect the movable objects. The monitoring stations 103 and 104 shall be spaced such that their ranges 105 and 106 do not overlap.

The monitoring stations can have omni-directional antennas, which emit signals in all directions as shown in Fig. 1 - 105 and 106. However, the respective areas 105 and 106 may have other shapes of coverage obtained for example with a directional, antenna. Accordingly, the areas 105, 106 may cover selected portions of sidewalks, entrances, road lanes or the like.

The automotive industry increasingly equips nearly all modern vehicles with Bluetooth devices. Older cars often are later fitted with hands free systems allowing operating different devices. Such hands free systems most frequently use Bluetooth technology. It can be expected in the very near future that Bluetooth modules will be placed in all produced vehicles. According to the Bluetooth standard, each Bluetooth unit has a unique identity. Equipment enabled with Bluetooth technology will automatically search the vicinity for other Bluetooth compliant equipment. On contact, information is exchanged allowing the system to determine weather or not to establish a more specific connection such as devices pairing. At this first encounter the Bluetooth devices transmit a personal identification number.

Moreover, it can be expected in the very near future that Wi-Fi modules will be placed in all produced smartphones. Each Wi-Fi unit has a unique identity. Equipment enabled with Wi-Fi technology and configured in a default mode will continuously search the vicinity for other Wi-Fi compliant equipment and allow establishing a communication session in which at least the identifiers of devices will be exchanged.

Therefore, it can be assumed that in many areas, such as centers of big cities, most of the moving entities, such as vehicles or pedestrians, are equipped with a wireless communication device.

The position of the vehicle 102A and 102B is shown at times t1 and t2. Knowing the time at which the movable object entered the communication range of the monitoring station and the distance between the two stations, it is possible to calculate the speed of the object between the monitoring stations. The distance between the monitoring stations may be calculated based on their geographical coordinates (from example, GPS coordinates) or can be established upfront in case the travel path between these points is not a straight line.

Each movable object and each monitoring station has a unique identifier, such as a MAC address.

When the movable object enters within the communication range of the monitoring station, a communication session is initiated between the two entities. During that session, at least the following data is determined: the identifier of the movable object, the identifier of the monitoring station and the time at which the communication session was initiated. That data is sent to a head-end station 108. The received data, related to at least two sessions initiated between the movable object and at least two different monitoring stations, is processed at the head-end station 108 to determine an average speed of the object between the monitoring stations.

By aggregating data related to a plurality of sessions initiated between a plurality of movable objects and monitoring stations, large amount of information about movable objects, their speed and paths of travel may be collected to form an effective telemetry system.

As wireless modules have become a standard in motor vehicles and mobile devices such as cellular telephones, the system according to the present invention does not to require specific installation of modules on vehicles which would be queried to provide data input.

The identifier of the movable object can be transmitted to the head-end station in an encrypted form, in order not to reveal the identity of the movable object and protect the privacy of the users of the system. Then, even if access to a database storing data on movable objects at the head-end would be revealed to unauthorized persons, the database would not contain direct identifiers (such as MAC addresses) of the objects, but identifiers in encrypted form. Therefore, access to data on a particular object would require not only access to the database, but access to the encryption algorithm as well. The encryption algorithm can be changed in time, for example it can be changed every day, in order to further increase the privacy of users and not to allow analysis of the paths travelled by the same object in consecutive days.

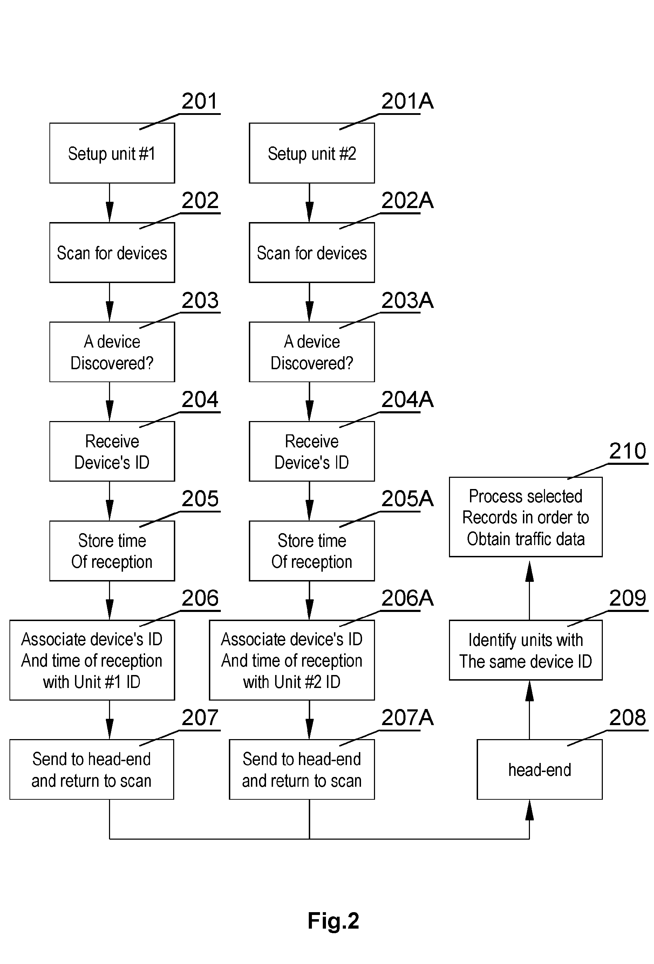

FIG. 2 shows a method for traffic data processing wherein the system is based on a wireless communication protocol such as Bluetooth, wherein the monitoring stations can detect the movable objects in their vicinity. The first step is to setup 201, 201 A the Bluetooth units at the monitoring stations. The units need to be powered on and their software needs to be initialized in order to start the scan. A Bluetooth antenna is switched on and scanning drivers are loaded, from units' non-volatile memory, and executed. At step 202, 202A the scan for other Bluetooth devices is started. From this point in time each of the Bluetooth units sends scanning signals in order to discover Bluetooth-enabled movable devices within the range of the unit's antenna.

In order to start the device discovery and connection establishment procedure, a Bluetooth device enters the inquiry state to discover other devices within the range. The Bluetooth specification defines inquiry access codes that allow a device to specify the type of device it is seeking, such as PDAs, telephones. In short, during inquiry, devices generate an inquiry hopping (channel changing) sequence. This hopping sequence covers a 32-channel subset of the available 79 Bluetooth channels. Once a device generates an inquiry hopping sequence, it broadcasts inquiry messages as it sequentially switches to each channel defined in the hopping sequence. This is a standard process for all Bluetooth devices.

If the device performing the inquiry scan receives an inquiry message, it enters the inquiry response substrate and replies with an inquiry response message. The inquiry response includes the remote device's address and clock, both of which are needed to establish a Bluetooth connection. The response message is sufficient for traffic telemetry according to the present invention. There is no need to establish a connection after inquiry. Nevertheless, there may be an option to do so in order to exchange further data with Bluetooth units.

After scanning the process checks whether a device has been discovered, step 203, 203A. A Bluetooth response message includes a device identifier in the form of a MAC address. The Bluetooth units store a device identifier identifying the Bluetooth device sending the response. The device identifier may be MAC address, a portion of the MAC address, or an identifier derived from the MAC address after its coding/transformation into a different value in order to address privacy issues and at the same time provide certainty of the same identifier number in all Bluetooth discovery inquiries. MAC addresses do not link to the device owner or user. The MAC addresses, or other identifiers, may be stored as the identifier of the responding Bluetooth device. The device identifier may be stored in the units' storage memory 204, 204A.

In step 205, 205A the Bluetooth units store a time at which a device has been discovered within Bluetooth unit's scanning range. After that each discovered device identifier is associated with a time of discovery 206, 206A. Both device identifier and discovery time are sent together with Bluetooth unit's identifier to a head-end in step 207, 207A. The communication link, over which data are communicated from Bluetooth units to the head-end 108 may be a GSM communication link. Preferably the communication link is bi-directional in order to facilitate remote control of Bluetooth units.

At step 208 the head-end receives, stores the retrieved data in a computer memory. The steps 201 to 208 may be repeated for each of N Bluetooth units. The information on Bluetooth units, of discovered devices' identifiers and time of discovery can be analyzed, processed in various ways. For example device's location and movement can be discovered. Device's routes can be determined together with typical movement habits such as driving to work at 7 a.m. and driving back home at 5 p.m. All the aforementioned information can be further processed for example in order to establish traffic predictions for selected areas. Additionally, time of presence in and number of entries to a given area, such as shopping mall, can be determined.

In order to determine speed of a device, the head-end at step 209 identifies an object (its identifier such as MAC address) that has been discovered by two different Bluetooth units in two different monitoring stations. Then, based on communicated distance between the two Bluetooth units, the head-end can calculate 210 device's average speed between the two Bluetooth units. The distance between two Bluetooth units can be communicated to the head-end at Bluetooth units setup manually or be determined based on GPS coordinates data sent from each Bluetooth unit to the head-end.

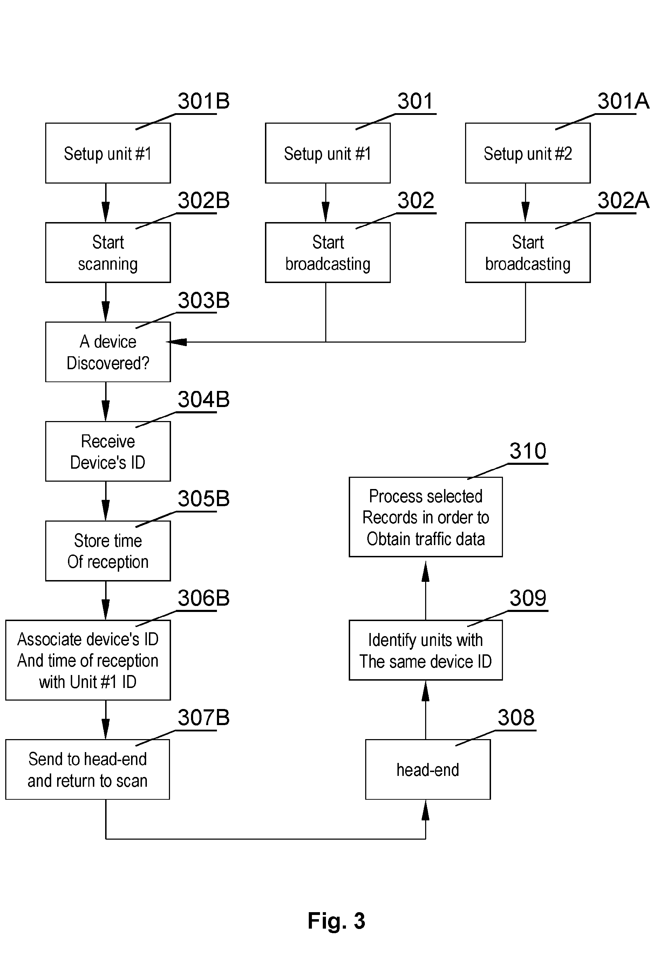

FIG. 3 shows a method for traffic data processing wherein the system is based on a wireless communication protocol such as Wi-Fi, wherein the movable object can detect the monitoring stations in their vicinity. The first step is to setup 301, 301 A the Wi-Fi units at the monitoring stations and to setup 301 B the Wi-Fi unit at the movable object. The units of the monitoring stations need to be powered on and their software needs to be initialized in order to allow the mobile device to detect the units. The unit of the movable object needs to be initialized in order to allow scanning for other units. Wi-Fi antenna is switched on and scanning drivers are loaded from units' non-volatile memory and executed. At steps 302, 302A the units of the monitoring stations start broadcasting information about their services and the unit of the movable object starts scanning in step 302B. After scanning, the process checks whether a Wi-Fi device is found in step 303B. A Wi-Fi response message includes a device identifier in the form of a MAC address. The Wi-Fi unit in the movable object stores a device identifier identifying the Wi-Fi device of the monitoring station sending the response. The device identifier may be MAC address, a portion of the MAC address, or an identifier derived from the MAC address after its coding/transformation into a different value in order to address privacy issues and at the same time provide certainty of the same identifier number in all Wi-Fi discovery inquiries. MAC addresses do not link to the device owner or user. The MAC addresses, or other identifiers, may be stored as the identifier of the responding Wi-Fi device. The device identifier may be stored in the units' storage memory 304B.

In step 305B the Wi-Fi unit stores a time at which a device of the monitoring station has been connected within Wi-Fi unit's scanning range. After that, the connected device identifier is associated with a time of discovery 306B. The movable unit identifier, the monitoring station identifier and discovery time are sent to a head-end in step 307B. The communication link, over which data are communicated from Wi-Fi units to the head-end 108 may be a GSM communication link. Preferably the communication link is bi-directional in order to facilitate remote control of Wi-Fi units.

At step 308 the head-end receives and stores the retrieved data. The information on Wi-Fi units of connected devices' identifiers and time of connection can be analyzed, processed in various ways. For example device's location and movement can be discovered. Device's routes can be determined together with typical movement habits such as driving to work at 7 a.m. and driving back home at 5 p.m. All the aforementioned information can be further processed for example in order to establish traffic predictions for selected areas. Additionally, time of presence in and number of entries to a given area, such as shopping mall, can be determined.

In order to determine speed of a device, the head-end at step 309 identifies a device (its identifier such as MAC address) that has discovered two different Wi-Fi units. Then based on communicated distance between the two Wi-Fi units the head-end can calculate 310 device's average speed between the two Wi-Fi units. The distance between two Wi-Fi units at the monitoring stations can be communicated to the head-end at Wi-Fi units setup manually or be can determined based on the GPS coordinates data sent from each Wi-Fi unit to the head-end.

It can be easily recognised, by one skilled in the art, that the aforementioned system and method for controlling method for traffic telemetry may be performed and/or controlled by one or more computer programs. Such computer programs are typically executed by utilizing the computing resources in a computing device such as personal computers, personal digital assistants, cellular telephones, receivers and decoders of digital television or the like. Applications are stored in non-volatile memory, for example a flash memory or volatile memory, for example RAM and are executed by a processor. These memories are exemplary recording media for storing computer programs comprising computer-executable instructions performing all the steps of the computer-implemented method according the technical concept presented herein.

The present invention may be implemented using any display, for example on computer monitor, a television display, a mobile phone, PDA, or a laptop computer.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

## Claims

1. A method of collecting and calculating traffic telemetry data, comprising the steps of:
- providing a movable object (102A, 102B) handling a wireless communication interface;
- providing at least two monitoring stations (103, 104) handling the wireless communication interface and having a geographical position known to a head-end station (108);
- upon detecting that the movable object (102A, 102B) is within the communication range of the monitoring station (103, 104), initiating a communication session between the movable object (102A, 102B) and the monitoring station (103, 104) and determining an identifier of the object and an identifier of the monitoring station;
- providing the identifier of the object, the identifier of the monitoring station and the time at which the communication session was initiated to a head-end station (108);
- processing, at the head-end station (108), received data related to at least two sessions initiated between the movable object and at least two different monitoring stations to determine an average speed of the object between the monitoring stations.

2. The method according to claim 1, wherein the communication session is initiated by the monitoring station (103, 104) and the identifier of the object, the identifier of the monitoring station and the time at which the communication session was initiated is provided to the head-end station (108) by the monitoring station (103, 104).

3. The method according to claim 2, wherein the wireless communication interface is an interface compliant with the Bluetooth standard.

4. The method according to claim 1, wherein the communication session is initiated by the movable object (102A, 102B) and the identifier of the object, the identifier of the monitoring station and the time at which the communication session was initiated is provided to the head-end station (108) by the movable object (1 02A, 102B).

5. The method according to claim 2, wherein the wireless communication interface is an interface compliant with an IEEE 802.11-type standard.

6. The method according to any of previous claims, wherein the identifier of the movable object is provided to the head-end station (108) in an encrypted form.

7. The method according to claim 6, comprising the step of periodically varying the encryption parameters of the identifier of the movable object provided to the head-end station (108).

8. A system for collecting and calculating traffic telemetry data, comprising:
- a movable object (102A, 102B) handling a wireless communication interface;
- at least two monitoring stations (103, 104) handling the wireless communication interface and having a geographical position known to a head-end station (108);
- means to detect that the movable object (102A, 102B) is within the communication range of the monitoring station (103, 104) and to initiate a communication session between the movable object (102A, 102B) and the monitoring station (103, 104) and determining an identifier of the object and an identifier of the monitoring station;
- means to provide the identifier of the object, the identifier of the monitoring station and the time at which the communication session was initiated to a head-end station (108);
- wherein the head-end station (108) is configured to receive data related to at least two sessions initiated between the movable object and at least two different monitoring stations to determine an average speed of the object between the monitoring stations.
